# EUROPEAN PATENT APPLICATION

(11) **EP 4 429 008 A1**
(43) Date of publication of application: **11.09.2024**
(21) Application number: 23887180.0
(22) Date of filing: 19.01.2023
(51) Int. Cl.: H01M 50/30, H01M 10/04, H01M 50/14

(54) **BATTERY CELL, BATTERY, AND ELECTRIC DEVICE**

(71) Applicant: Contemporary Amperex Technology Co., Limited, Ningde, Fujian 352100 (CN)
(72) Inventor: KE, Haibo, Ningde, Fujian 352100 (CN); MEI, Xiang, Ningde, Fujian 352100 (CN); LI, Quankun, Ningde, Fujian 352100 (CN); WANG, Peng, Ningde, Fujian 352100 (CN); WU, Ningsheng, Ningde, Fujian 352100 (CN); YANG, Kaihuan, Ningde, Fujian 352100 (CN)
(74) Representative: Gong, Jinping
(86) International application number: PCT/CN2023/073102
(87) International publication number: WO 2024/152291

(57) **Abstract**

This application discloses a battery cell (10), a battery, and an electric apparatus. The battery cell (10) includes a housing (100) and a shielding member (300). The housing (100) has an inner cavity, the housing (100) has a first wall (121), and the first wall (121) is provided with a weak portion (400). The shielding member (300) is disposed in the inner cavity, and the shielding member (300) covers at least a portion of the weak portion (400) in a thickness direction of the first wall (121). In the battery cell (10) of this application, the shielding member (300) covers at least a portion of the weak portion (400) from the inside of the housing (100), thereby preventing direct contact between the electrolyte and the at least a portion of the weak portion (400), protecting the weak portion (400).

## Description

### TECHNICAL FIELD

This application relates to the field of batteries, and specifically relates to a battery cell, a battery, and an electric apparatus.

### BACKGROUND

As people pay increasing attention to environmental protection, electric vehicles are rapidly rising in the vehicle industry due to their advantages of energy conservation and environmental protection. A battery is used as a power supply device for an electric vehicle, and an explosion-proof valve is disposed in the battery. In some cases, the explosion-proof valve is located at the bottom of the battery, and the electrolyte is located above the explosion-proof valve. Due to the long-term contact between the electrolyte and the explosion-proof valve and some impact on the explosion-proof valve caused by the flow of the electrolyte, the explosion-proof valve may open prematurely.

### TECHNICAL PROBLEM

One objective of embodiments of this application is to provide a battery cell, a battery, and an electric apparatus, so as to solve the problem to some extent that an explosion-proof valve opens prematurely due to the impact of an electrolyte.

### TECHNICAL SOLUTIONS

The technical solutions used in the embodiments of this application are as follows.

According to a first aspect, this application provides a battery cell including:
a housing, where the housing has an inner cavity, the housing has a first wall, and the first wall is provided with a weak portion; and
a shielding member, where the shielding member is disposed in the inner cavity, and the shielding member covers at least a portion of the weak portion in a thickness direction of the first wall.

In the technical solutions in the embodiments of this application, the weak portion is configured for pressure relief. When temperature or pressure in the inner cavity of the housing reaches a threshold, the weak portion is damaged, so as to achieve pressure relief of the battery cell. Because the shielding member is provided inside the housing and the shielding member covers at least a portion of the weak portion, the provision of the shielding member can reduce impact of an electrolyte on at least a portion of the weak portion in the thickness direction of the first wall, thereby improving the protective effect on the weak portion, alleviating or even solving the problem to some extent that the weak portion is damaged due to the impact of the electrolyte.

In some embodiments, the shielding member covers the entire weak portion.

In such an arrangement manner, the shielding member covers a larger portion of the weak portion and provides better protective effect.

In some embodiments, the weak portion encloses a pressure relief region, the shielding member covering at least a portion of the pressure relief region.

In such an arrangement manner, the pressure relief region has a relatively larger range and provides better pressure relief effect. The shielding member not only covers at least a portion of the weak portion but also covers at least a portion of the pressure relief region, which can provide better protective effect on the battery.

In some embodiments, the shielding member is connected to the first wall.

In such an arrangement manner, the shielding member occupies relatively less space in the inner cavity of the housing.

In some embodiments, the shielding member includes a substrate portion and a connecting portion, where the substrate portion is connected to the first wall through the connecting portion, and at least a portion of the connecting portion surrounds the weak portion.

In such an arrangement manner, the connecting portion is configured to fix the substrate portion to the first wall, and at least a portion of the connecting portion surrounds the weak portion such that the connecting portion covers at least a portion of the weak portion.

In some embodiments, the first wall has a recess, where the weak portion is disposed on an inner wall of the recess, a gas passage is provided between the shielding member and the housing, and the gas passage communicates with the recess.

In such an arrangement manner, the provision of the gas passage is conducive to communication between the cavity in the recess and the inner cavity of the housing, thereby facilitating helium detection.

In some embodiments, the first wall has a recess, where the weak portion is disposed on an inner wall of the recess, a gas passage is provided on the shielding member and/or the housing, and the gas passage communicates with the recess.

In such an arrangement manner, the provision of the gas passage is conducive to communication between the cavity in the recess and the inner cavity of the housing, thereby facilitating helium detection.

In some embodiments, the gas passage includes a first passage, where the shielding member includes a substrate portion and a plurality of connecting portions spaced apart on the substrate portion, and the first passage is formed between adjacent ones of the connecting portions.

In such an arrangement manner, the first passage is provided on the shielding member, and adjacent connecting portions in the shielding member enclose the first passage.

In some embodiments, the first passage has at least two openings, the opening being used for communication with the inner cavity of the housing.

In such an arrangement manner, the provision of the two openings allows for two communication points between the first passage and the inner cavity of the housing, enhancing connectivity.

In some embodiments, the first passage runs through the shielding member along a direction parallel to the first wall.

In such an arrangement manner, the first passage extends along a straight line for ease of manufacture.

In some embodiments, the connecting portion is provided in a quantity of two, where the two connecting portions are spaced apart in a width direction of the housing, and a distance between the two connecting portions is greater than or equal to 0.1 times a size of the recess in the width direction of the housing.

In such an arrangement manner, the provision of the connecting portions allows the first passage to have sufficient width to facilitate communication between the recess and the inner cavity of the housing through the first passage.

In some embodiments, the distance between the two connecting portions is greater than or equal to 0.3 times the size of the recess in the width direction of the housing.

In some embodiments, the connecting portion is provided in a quantity of two, where the two connecting portions are spaced apart in a length direction of the housing, and a distance between the two connecting portions is greater than or equal to 0.3 times a size of the recess in the length direction of the housing.

In such an arrangement manner, the provision of the connecting portions allows the first passage to have sufficient width to facilitate communication between the recess and the inner cavity of the housing through the first passage.

In some embodiments, the distance between the two connecting portions is greater than or equal to 0.6 times the size of the recess in the length direction of the housing.

In some embodiments, the gas passage includes a second passage, where an air vent runs through the shielding member along a thickness direction of the shielding member, the air vent forms the second passage, and a projection of the air vent on the first wall is located outside the weak portion.

In such an arrangement manner, the second passage is provided on the shielding member, and the air vent running through the shielding member forms the second passage.

In some embodiments, a hole diameter of the air vent is R, where 0.1 mm < R ≤ 10 mm.

Within such a range of the hole diameter of the air vent, the provision of the air vent can not only allow the shielding member to have certain structural strength to cover the weak portion but also meet the requirement for communication between the recess and the inner cavity of the housing.

In some embodiments, 1 mm ≤ R ≤ 5 mm.

In some embodiments, thickness of the shielding member is greater than or equal to 0.01 mm, and the thickness of the shielding member is less than or equal to 0.2 mm.

In such an arrangement manner, the shielding member occupies relatively less space with sufficient structural strength ensured.

In some embodiments, the thickness of the shielding member is less than or equal to 0.1 mm.

In some embodiments, a cell assembly is accommodated in the housing body, the first wall being located below the cell assembly.

In such an arrangement manner, the weak portion is located below the cell assembly, the electrolyte is located above the weak portion, and the shielding member covers at least a portion of the weak portion, so as to prevent contact between the electrolyte and at least a portion of the weak portion.

In some embodiments, the housing includes a housing body and an end cover plate, where the end cover plate covers an opening of the housing body, and the first wall is located on the end cover plate.

In some embodiments, the housing includes a housing body and an end cover plate, where the end cover plate covers an opening of the housing body, and the first wall is located on the housing body.

In some embodiments, in a length direction of the housing, a size of the shielding member is at least 30 mm greater than a size of the recess.

In such an arrangement manner, the shielding member has a sufficient region for connection to the first wall and provides better connection effect.

In some embodiments, in the length direction of the housing, a difference between the size of the shielding member and the size of the recess is less than or equal to 120 mm.

In some embodiments, in a width direction of the housing, a size of the shielding member is at least 4 mm greater than a size of the recess.

In such an arrangement manner, the shielding member at least covers the entire weak portion in the width direction and provides good shielding effect.

In some embodiments, a difference between the size of the shielding member and the size of the recess is less than or equal to 40 mm.

According to a second aspect, this application provides a battery including the battery cell in the foregoing embodiments.

The battery includes the foregoing battery cell, and therefore has at least all of the beneficial effects of the foregoing battery cell. Details are not described herein again.

According to a third aspect, this application provides an electric apparatus including the battery in the foregoing embodiments, where the battery is configured to supply electric energy.

The electric apparatus includes the foregoing battery, and therefore has at least all of the beneficial effects of the foregoing battery. Details are not described herein again.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, in all the accompanying drawings, the same reference signs represent the same parts. In the accompanying drawings:
FIG. 1 is a schematic structural exploded view of a battery cell according to some embodiments of this application;
FIG. 2 is a schematic structural diagram of a housing body according to some embodiments of this application;
FIG. 3 is a cross-sectional view along A-A in FIG. 2;
FIG. 4 is a partially enlarged view of position B in FIG. 3;
FIG. 5 is a schematic structural diagram of a shielding member in a battery cell according to some embodiments of this application;
FIG. 6 is a schematic diagram of distribution of connecting portions on a substrate portion of a shielding member in a battery cell according to some embodiments of this application;
FIG. 7 is a schematic structural diagram of another shielding member in a battery cell according to some embodiments of this application;
FIG. 8 is a schematic diagram of distribution of connecting portions on a substrate portion of another shielding member in a battery cell according to some embodiments of this application;
FIG. 9 is a schematic structural diagram of a shielding member from another perspective according to some embodiments of this application;
FIG. 10 is a schematic diagram of distribution of a shielding member on a first wall according to some embodiments of this application; and
FIG. 11 is a schematic diagram of distribution of a recess on a first wall according to some embodiments of this application.

Reference signs in the specific embodiments are described as follows:
10. battery cell;
100. housing; 110. end cover assembly; 111. end cover plate; 112. pole; 120. housing body; 121. first wall; 122. recess;
200. cell assembly; 210. cell body; 220. tab;
300. shielding member; 310. substrate portion; 320. connecting portion;
400. weak portion; 410. explosion-proof valve sheet; 420. explosion-proof protective patch;
500. adapting piece;
600. gas passage; 610. first passage; and 620. second passage.

### EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "a plurality of" means more than two (inclusive).

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

As environmental pollution becomes increasingly severe, people have increased environmental awareness. Meanwhile, the rapid rise of the new energy industry provides broad space for the application and development of lithium-ion batteries. Lithium-ion batteries have been widely used due to their characteristics such as high energy density, long cycle life, and good charge and discharge rate performance. More and more electric devices, such as mobile phones, notebook computers, electric tools, and electric vehicles, choose lithium-ion batteries as power sources, and people generally refer to the lithium-ion batteries used in the foregoing electric devices as traction batteries. A traction battery typically includes a battery cell, where the battery cell includes a housing and a cell assembly, the cell assembly is mounted inside the housing, an explosion-proof structure (for example, an explosion-proof valve) is mounted on the housing, and the explosion-proof structure is used to relieve pressure from the battery when temperature or pressure inside the housing exceeds a threshold. The inventors have noted that when the explosion-proof structure is located below the cell assembly, free electrolyte in the housing accumulates on the explosion-proof structure. The electrolyte may have some corrosive effects on the explosion-proof structure. In addition, during use of the battery, the flow of the electrolyte in the housing causes some impact on the explosion-proof structure. Both the foregoing two factors may damage the explosion-proof structure, that is, the explosion-proof structure opens prematurely, breaking when pressure relief is not required, thus affecting normal operation of the battery.

Based on the foregoing considerations, to solve the problem that the electrolyte adversely affects the explosion-proof structure, the inventors, after in-depth research, have designed a battery cell, in which a shielding member is disposed at a position on an inner side of a housing corresponding to the explosion-proof structure, and the shielding member is used to protect the explosion-proof structure to some extent, thereby alleviating the adverse effects of the electrolyte on the explosion-proof structure.

The battery cell disclosed in the embodiments of this application may be used for electric apparatuses that use a battery as a power source or various energy storage systems that use a battery as an energy storage element.

In the embodiments of this application, the length direction, the width direction, and the thickness direction respectively refer to the length direction, the width direction, and the height direction of the battery cell, and the battery cell is the smallest unit constituting the battery.

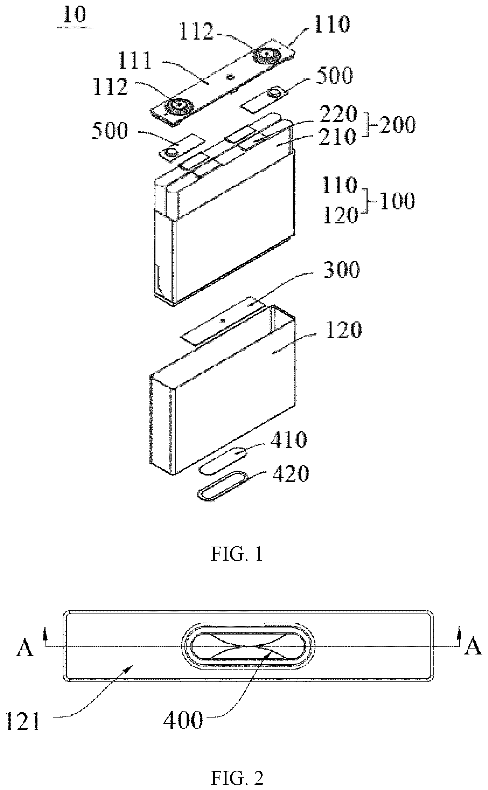

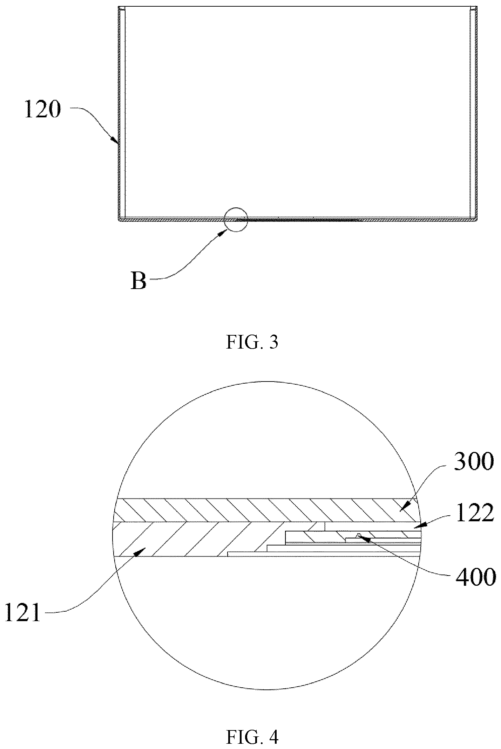

As shown in FIG. 1 to FIG. 4, a first aspect of the embodiments of this application provides a battery cell 10. The battery cell 10 includes a housing 100 and a shielding member 300. The housing 100 has an inner cavity, the housing 100 has a first wall 121, and the first wall 121 is provided with a weak portion 400. The shielding member 300 is disposed in the inner cavity, and the shielding member 300 covers at least a portion of the weak portion 400 in a thickness direction of the first wall 121.

The housing 100 is a structure for forming the inner cavity, and the inner cavity is used to accommodate other components of the battery cell 10. The first wall 121 is any one of walls of the housing 100, and may be a top wall, a bottom wall, or a side wall.

The first wall 121 is provided with the weak portion 400, and the weak portion 400 is configured to break when temperature or pressure of the battery cell 10 exceeds a threshold, so as to achieve pressure relief of the battery cell 10. The weak portion 400 may be a scratch, a thinning portion, or an explosion-proof valve sheet 410 mounted to the housing 100. The thinning portion is a region that has a thickness smaller than other regions of the first wall 121.

The shielding member 300 is configured to cover at least a portion of the weak portion 400. "Cover" means that the shielding member 300 covers the surface of the weak portion 400, or the shielding member 300 is spaced apart from the weak portion 400, but an orthographic projection of the shielding member 300 on the first wall 121 covers the weak portion 400. Because the shielding member 300 is mounted in the inner cavity, the shielding member 300 covers an inner side of the weak portion 400, that is, the shielding member 300 separates the portion of the weak portion 400 covered by the shielding member 300 from an electrolyte, which can prevent direct contact between the electrolyte and the weak portion 400 covered by the shielding member 300, thereby protecting the weak portion 400 to some extent.

The shielding member 300 may be made of an insulating material, for example, the shielding member 300 may include a portion made of a PET (Polyethylene terephthalate, polyethylene terephthalate) material.

In some optional embodiments, the battery cell 10 further includes a cell assembly 200, the housing 100 includes an end cover assembly 110 and a housing body 120, and the end cover assembly 110 includes an end cover plate 111 and poles 112, where the end cover plate 111 is a component that covers an opening of the housing body 120 to insulate the inner cavity of the battery cell 10 from an external environment. The pole 112 is configured to be electrically connected to the cell assembly 200 for outputting or inputting electric energy of the battery cell 10. The poles 112 include a positive pole and a negative pole, and the positive pole and the negative pole are spaced apart on the end cover plate 111 in a length direction of the battery cell.

The cell assembly 200 is a component in which electrochemical reactions take place in the battery cell 10, and the housing 100 may include one or more cell assemblies 200. The cell assembly 200 is mainly formed by winding or stacking a positive electrode plate and a negative electrode plate, and a separator is generally disposed between the positive electrode plate and the negative electrode plate. Parts of the positive electrode plate and the negative electrode plate with active substances constitute a cell body 210 of the cell assembly 200, while parts of the positive electrode plate and the negative electrode plate without active substances separately constitute a tab 220. During charging and discharging of the battery, the positive electrode active substance and the negative electrode active substance react with the electrolyte, and the tabs 220 are electrically connected to the poles 112 to form a current loop. The tabs 220 include a positive tab and a negative tab, where the positive tab is configured to be connected to the positive pole, and the negative tab is configured to be connected to the negative pole.

The battery cell 10 further includes adapting pieces 500, where the positive tab is connected to the positive pole through one adapting piece 500, and the negative tab is connected to the negative pole through the other adapting piece 500.

In the housing 100, the weak portion 400 may be disposed on the end cover plate 111, or may be disposed on the housing body 120, and specifically may be disposed on a wall plate in the housing body 120 opposite the end cover plate 111 or on other side walls of the housing body 120, where the wall plate provided with the weak portion 400 is the first wall 121. When the housing 100 is provided with weak portions 400 on different side walls, that is, when the housing 100 is provided with a plurality of weak portions 400, the shielding member 300 covers at least a portion of the weak portion 400 located on the bottom wall plate of the housing 100.

In some embodiments, a cell assembly 200 is accommodated in the housing 100, the first wall 121 being located below the cell assembly 200.

In such an arrangement manner, the weak portion 400 is located below the cell assembly 200, the electrolyte is located above the weak portion 400, and the shielding member 300 covers at least a portion of the weak portion 400, so as to prevent contact between the electrolyte and at least a portion of the weak portion 400.

The first wall 121 being located below the cell assembly 200 includes at least the following arrangement manner.

The housing 100 includes an end cover assembly 110 and a housing body 120, the end cover assembly 110 includes an end cover plate 111, and the first wall 121 is located on the end cover plate 111, that is, the weak portion 400 is disposed on the end cover plate 111. When the battery cell 10 is in a working position, the end cover plate 111 is located below the battery cell assembly 200 (that is, the battery cell 10 is in an inverted position after mounting). When the end cover plate 111 is located below the cell assembly 200, the electrolyte is located above the weak portion 400, and the shielding member 300 covers the weak portion 400 from above to cover at least a portion of the weak portion 400, so as to prevent direct impact of the electrolyte on the weak portion 400.

Alternatively, the first wall is located on the housing body 120, for example, the first wall 121 may be a side of the housing body 120 opposite the end cover plate 111. If the side provided with the end cover plate 111 is used as the top, the first wall 121 is the bottom wall of the housing body 120. During use of the battery cell 10, the end cover plate 111 is located at the top of the battery cell 10 and the first wall 121 is located at the bottom of the battery cell 10. The electrolyte is located above the weak portion 400, and the shielding member 300 covers the weak portion 400 from above to cover at least a portion of the weak portion 400, so as to prevent direct impact of the electrolyte on the weak portion 400. In addition, the first wall 121 may alternatively be a side surface of the housing body 120 other than the side opposite the end cover plate 111.

In some embodiments, the weak portion 400 includes an indentation, the indentation may be linear, and the shielding member 300 may partly or entirely cover the weak portion 400. When internal temperature or pressure of the battery cell 10 exceeds a threshold, such weak portion 400 tears and breaks from the indentation, so as to achieve pressure relief.

In some embodiments, the weak portion 400 encloses a pressure relief region. Specifically, the weak portion 400 is ring-shaped, and the region enclosed by the weak portion 400 forms the pressure relief region. The weak portion 400 may be a closed ring, such as a circular ring or a rectangular ring. The internal region enclosed by the weak portion 400 and the ring-shaped region in which the weak portion 400 is located form the pressure relief region, or the internal region enclosed by the weak portion 400, the region in which the weak portion 400 is located, and a region within a certain range outside the weak portion 400 form the pressure relief region. When internal temperature or pressure of the battery cell 10 exceeds a threshold, the weak portion 400 partly or entirely tears, such that the pressure relief region turns up relative to other regions of the first wall 121 or the pressure relief region is separated from the first wall 121, so as to achieve pressure relief more quickly. Alternatively, the weak portion 400 may be a ring with an opening, such as a C-shaped ring structure. The region enclosed by the ring or quasi-ring corresponding to the C-shaped ring structure forms the pressure relief region, or the region enclosed and a region within a certain range outside the ring or quasi-ring form the pressure relief region. When internal temperature or pressure of the battery cell 10 exceeds a threshold, the weak portion 400 partly or entirely tears, such that the pressure relief region turns up relative to other regions of the first wall 121, so as to achieve pressure relief more quickly.

In such an arrangement manner, because the weak portion 400 encloses the pressure relief region, the region for gas discharge during pressure relief is larger, with a faster pressure relief speed and better pressure relief effect.

In some embodiments, the shielding member 300 covers a portion of the weak portion 400, and the shielding member 300 protects the portion of the weak portion 400 that it covers.

In some embodiments, the shielding member 300 covers the entire weak portion 400, and the shielding member 300 better protects the weak portion 400. When the shielding member 300 covers the entire weak portion 400, the shielding member 300 may be of the same shape as the weak portion 400. For example, if the weak portion 400 is a ring-shaped structure, the shielding member 300 may also be a ring-shaped structure.

In some embodiments, in addition to covering at least a portion of the weak portion 400, the shielding member 300 covers at least a portion of the pressure relief region. With such arrangement, the shielding area of the shielding member 300 is relatively larger, helping the shielding member 300 to provide better protective effect on the weak portion 400.

For example, in some embodiments, the shielding member 300 covers the entire weak portion 400 and pressure relief region, thereby better protecting the weak portion 400.

In some embodiments, the shielding member 300 is connected to an inner wall of the housing 100. For example, the shielding member 300 may be connected to the first wall 121 of the housing 100 or to other inner walls.

In some embodiments, the shielding member 300 is connected to the first wall 121 of the housing 100. Because the weak portion 400 is disposed on the first wall 121 and the shielding member 300 is also connected to the first wall 121, the shielding member 300 occupies small space in the housing 100 while covering the weak portion 400.

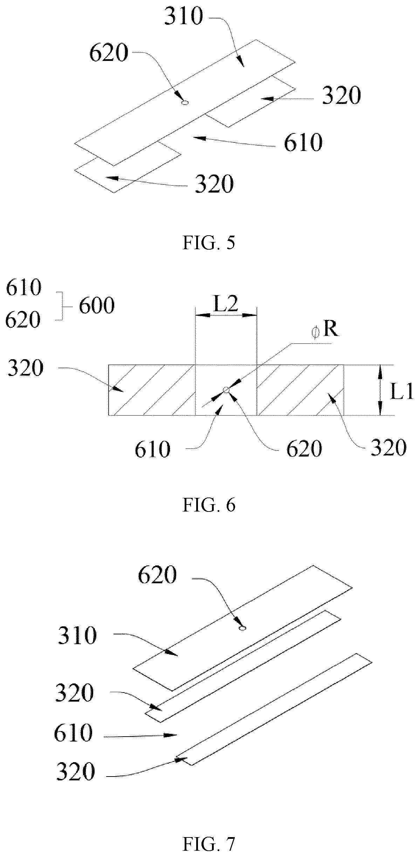

In some embodiments, as shown in FIG. 5 to FIG. 8, the shielding member 300 includes a substrate portion 310 and connecting portions 320, where the substrate portion 310 is connected to the first wall 121 through the connecting portions 320, and at least a portion of the connecting portion 320 surrounds the weak portion 400.

The substrate portion 310 is configured to cover the weak portion 400, and the substrate portion 310 serves to separate the electrolyte from at least a portion of the weak portion 400, that is, to alleviate or even prevent impact of the electrolyte on the weak portion 400 along the first wall 121. The substrate portion 310 may be made of a PET material.

The connecting portion 320 is configured to fix the substrate portion 310 to the housing 100. At least a portion of the connecting portion 320 surrounds the weak portion 400, that is, at least a portion of the connecting portion 320 is connected to the first wall 121 located outside the weak portion 400, so as to fix the substrate portion 310 to a region opposite the weak portion 400, thereby using the substrate portion 310 to cover and protect the weak portion 400.

In such an arrangement manner, the connecting portion 320 is configured to fix the substrate portion 310 to the first wall 121, and at least a portion of the connecting portion 320 surrounds the weak portion 400 such that the connecting portion 320 covers at least a portion of the weak portion 400.

In some embodiments, the substrate portion 310 may be bonded to the housing 100 through the connecting portions 320. The connecting portion 320 may be an adhesive material such as double-sided tape or glue. The connecting portions 320 may be disposed on a side of the substrate portion 310 facing toward the first wall 121.

In some embodiments, the first wall 121 has a recess 122, where the weak portion 400 is disposed on an inner wall of the recess 122, a gas passage 600 is provided between the shielding member 300 and the housing 100, and the gas passage 600 communicates with the recess 122.

In an arrangement manner, the recess 122 is provided on an inner side of the first wall 121, the inner wall of the recess 122 is provided with an indentation to form the weak portion 400, and the provision of the recess 122 reduces thickness of the region of the first wall 121 provided with the weak portion 400, thereby facilitating pressure relief through the weak portion 400.

In another arrangement manner, the first wall 121 is provided with a through hole running through the first wall 121, an explosion-proof valve sheet 410 is mounted in the through hole, the weak portion 400 is disposed on the explosion-proof valve sheet 410, and the explosion-proof valve sheet 410 is mounted behind the through hole. Because thickness of the explosion-proof valve sheet 410 extending into the through hole is smaller than thickness of the first wall 121, the recess 122 is formed between the explosion-proof valve sheet 410 and the first wall 121. The battery cell 10 may further include an explosion-proof protective patch 420, where the explosion-proof protective patch 420 is disposed on a side of the explosion-proof valve sheet 410 facing away from the shielding member 300 to protect the explosion-proof valve sheet 410 from the outside of the explosion-proof valve sheet 410.

In such an arrangement manner, because the first wall 121 is provided with the recess 122, the cavity formed in the recess 122 is separated from the inner cavity of the housing 100 after the shielding member 300 covers the recess 122. If helium detection is performed, the cavity formed in the recess 122 becoming a sealed cavity may result in a low accuracy of helium detection results. The gas passage 600 is provided between the shielding member 300 and the housing 100, and the gas passage 600 communicates the cavity in the recess 122 with the inner cavity of the housing 100, thereby facilitating improvement in the accuracy of the helium detection results.

The gas passage 600 is provided between the shielding member 300 and the housing 100. For example, in a feasible embodiment, the gas passage 600 includes a cylinder, where the cylinder has two openings, and the gas passage 600 for communicating the recess 122 with the inner cavity of the housing 100 is formed between the two openings. When the shielding member 300 includes the substrate portion 310 and the connecting portions 320, the cylinder may be disposed between the substrate portion 310 and the first wall 121 such that the substrate portion 310 covers at least a portion of the cylinder, and then the substrate portion 310 and the cylinder are separately fixed to the first wall 121 through the connecting portions 320. Alternatively, in another feasible embodiment, at least two spaced-apart support bodies may be disposed on the inner wall of the first wall 121, where a portion of the shielding member 300 covers the support bodies, and the support bodies cause certain gaps between the shielding member 300 and the first wall 121, such that the shielding member 300, the first wall 121, and the at least two adjacent support bodies enclose the gas passage 600. The cylinder may be a square cylinder, a circular cylinder, an elliptical cylinder, or of another shape.

In some embodiments, the first wall 121 has a recess 122, where the weak portion 400 is disposed on an inner wall of the recess 122, a gas passage 600 is provided on the shielding member 300 and/or the housing 100, and the gas passage 600 communicates with the recess 122. In other words, the gas passage 600 may be provided on only the shielding member 300, on only the housing 100, or on both the shielding member 300 and the housing 100.

In such an arrangement manner, the gas passage 600 is manufactured during manufacturing of the shielding member 300 and/or the housing 100, with no need to manufacture and mount the gas passage 600 separately.

Referring to FIG. 5, in some embodiments, the gas passage 600 includes a first passage 610, where the shielding member 300 includes a substrate portion 310 and a plurality of connecting portions 320 spaced apart on the substrate portion 310, and the first passage 610 is formed between adjacent ones of the connecting portions 320. For example, the connecting portion 320 is an adhesive layer, and the adhesive layer has one side bonded to the substrate portion 310 and the other side bonded to the first wall 121, an adhesive-free region is formed between adjacent adhesive layers, and the adhesive-free region can be used for passage of gases, so as to form the first passage 610.

In such an arrangement manner, the first passage 610 is provided on the shielding member 300, and adjacent connecting portions 320 in the shielding member 300 enclose the first passage 610. In such an arrangement manner of the first passage 610, there is no need to increase a structure on the shielding member 300 nor a manufacturing process, and the first passage 610 can be formed on the shielding member 300 by only adjusting the positions of the connecting portions 320 on the shielding member 300.

Shape of the first passage 610 is related to shape of the adhesive-free region, and the shape of the adhesive-free region is related to shape, number, and position of the connecting portions 320. The first passage 610 may be provided with one, two, or more openings.

In some embodiments, the opening of the first passage 610 is provided in a quantity of one, and the connecting portion 320 is provided in a quantity of two. The two connecting portions 320 are connected to two sides of the substrate portion 310 respectively, the two connecting portions 320 are connected to each other at one end, and the other ends of the two connecting portions 320 are spaced apart, where one opening of the first passage 610 is formed between the ends of the two connecting portions 320 spaced apart. Gas in the inner cavity of the housing 100 may enter the first passage 610 through the opening and enter the recess 122 through the first passage 610, and gas in the recess 122 may flow to the inner cavity of the housing 100 through the opening of the first passage 610, so as to achieve communication between the recess 122 and the inner cavity of the housing 100.

In some embodiments, the first passage 610 has at least two openings, the opening being used for communication with the inner cavity of the housing 100. An increase in the number of openings results in an increase in communication points between the recess 122 and the inner cavity of the housing 100. If one of the openings is closed due to an external force (for example, impact of the electrolyte), communication between the recess 122 and the inner cavity of the housing 100 can also be achieved through other openings.

In addition, the two connecting portions 320 spaced apart on the substrate portion 310 can enclose the first passage 610 with two openings together with the substrate portion 310, and the first passage 610 is manufactured and formed in a simple and convenient manner.

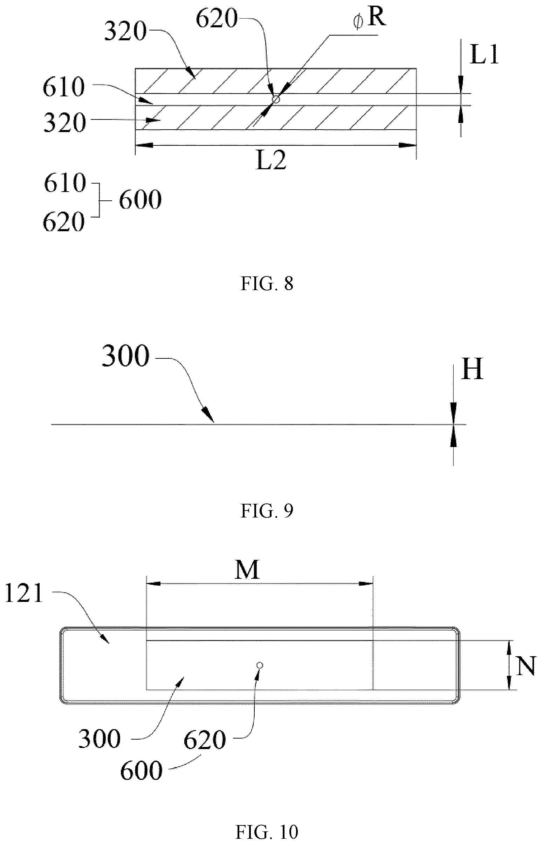

In some embodiments, as shown in FIG. 9, thickness H of the shielding member 300 is greater than or equal to 0.01 mm, and the thickness H of the shielding member 300 is less than or equal to 0.2 mm. For example, the thickness H of the shielding member 300 may be 0.01 mm, 0.02 mm, 0.03 mm, 0.05 mm, 0.08 mm, 0.11 mm, 0.15 mm, 0.17 mm, or 0.2 mm.

The thickness H of the shielding member 300 is a size of the shielding member 300 in a thickness direction of the battery cell 10. When the shielding member 300 includes the substrate portion 310 and the connecting portions 320, and the connecting portions 320 are disposed in a portion of a side of the substrate portion 310 facing toward the first wall 121, in the region of the substrate portion 310 provided with the connecting portions 320, thickness of the shielding member 300 is a sum of thickness of the substrate portion 310 and thickness of the connecting portion 320. In the region of the substrate portion 310 provided with no connecting portion 320, thickness of the shielding member 300 is the thickness of the substrate portion 310.

The thickness H of the shielding member 300 is set to be greater than or equal to 0.01 mm, so that the shielding member 300 has sufficient structural strength to separate the electrolyte from the weak portion 400, thereby better protecting the weak portion 400. The thickness H of the shielding member 300 is set to be less than or equal to 0.2 mm, so that within such a size range, the shielding member 300 has sufficient structural strength. If the thickness is greater than that size, structural redundancy is caused, occupying more space in the inner cavity.

In some embodiments, thickness H of the shielding member 300 is greater than or equal to 0.01 mm, and the thickness H of the shielding member 300 is less than or equal to 0.1 mm. For example, the thickness H of the shielding member 300 may be 0.01 mm, 0.02 mm, 0.03 mm, 0.04 mm, 0.05 mm, 0.07 mm, 0.09 mm, or 0.1 mm.

The thickness H of the shielding member 300 is set to be greater than or equal to 0.01 mm, so that the shielding member 300 has sufficient structural strength to separate the electrolyte from the weak portion 400, thereby better protecting the weak portion 400. The thickness H of the shielding member 300 is set to be less than or equal to 0.1 mm, so that within such a size range, the shielding member 300 has sufficient structural strength and occupies less space in the inner cavity.

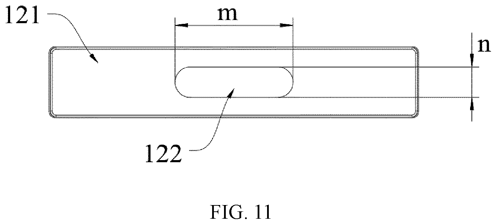

In some embodiments, in a length direction of the housing 100, a size of the shielding member 300 is at least 30 mm greater than a size of the recess 122. Within such a size range, the shielding member 300 can cover the entire recess 122 in the length direction of the housing 100, and the size of the shielding member 300 is at least 30 mm greater than the size of the recess 122, which is intended to facilitate arrangement of connecting portions 320 with a larger range, so as to increase connecting area between the shielding member 300 and the first wall 121, improving connection stability between the shielding member 300 and the first wall 121. Because a size of the housing 100 in the length direction is relatively larger, sizes of other regions of the first wall 121 than the recess 122 are relatively larger in the length direction of the housing 100, facilitating arrangement of a shielding member 300 of a larger size. As shown in FIG. 10 and FIG. 11, in the length direction of the housing 100, the size of the shielding member 300 is M, and the size of the recess 122 is m, where M - m ≥ 30 mm.

In some embodiments, in the length direction of the housing 100, the size of the shielding member 300 is at least 30 mm greater than the size of the recess 122, and a difference between the size of the shielding member 300 and the size of the recess 122 is less than or equal to 120 mm. 30 mm ≤ M - m ≤ 120 mm. Such a size range is applicable to a relatively large number of models of the battery cell 10, and the size of the shielding member 300 and the size of the recess 122 can be specifically set based on the size of the first wall 121 in the battery cell 10.

In some embodiments, in a width direction of the housing 100, a size of the shielding member 300 is at least 4 mm greater than a size of the recess 122. Within such a size range, the shielding member 300 can cover the entire recess 122 in the width direction of the housing 100, and the size of the shielding member 300 is at least 4 mm greater than the size of the recess 122, which is intended to facilitate arrangement of connecting portions 320 with a larger range, so as to increase connecting area between the shielding member 300 and the first wall 121, improving connection stability between the shielding member 300 and the first wall 121. Because a size of the housing 100 in the width direction is relatively smaller, sizes of other regions of the first wall 121 than the recess 122 are relatively smaller in the width direction of the housing 100. Therefore, the range in which the shielding member 300 can be larger than the recess 122 in size is limited, and in the limited arrangement region, the size of the shielding member 300 being ensured to be at least 4 mm greater than the size of the recess 122 can ensure that the shielding member 300 covers the entire recess 122 in the width direction. As shown in FIG. 10 and FIG. 11, in the width direction of the housing 100, the size of the shielding member 300 is N, and the size of the recess 122 is n, where N - n ≥ 4 mm.

In some embodiments, in the width direction of the housing 100, the size of the shielding member 300 is at least 4 mm greater than the size of the recess 122, and a difference between the size of the shielding member 300 and the size of the recess 122 is less than or equal to 40 mm. 4 mm ≤ N - n ≤ 40 mm. Such a size range is applicable to a relatively large number of models of the battery cell 10, and the size of the shielding member 300 and the size of the recess 122 can be specifically set based on the size of the first wall 121 in the battery cell 10.

As shown in FIG. 5 to FIG. 8, in some embodiments, the first passage 610 runs through the shielding member 300 along a direction parallel to the first wall 121.

In such an arrangement manner, the first passage 610 extends along a straight line for ease of manufacture. A rectangular sheet-shaped substrate portion 310 and two rectangular sheet-shaped connecting portions 320 are used, and the two rectangular sheet-shaped connecting portions 320 are spaced apart on the substrate portion 310 to form the first passage 610 parallel to the first wall 121 between the two connecting portions 320. It is easier to form the rectangular shape of the connecting portions 320. If the connecting portion 320 is a tape, the process of cutting the tape into a rectangular shape is convenient and efficient. If the connecting portion 320 is a glue, applying the glue on the substrate portion 310 along a straight line can form the rectangular connecting portion 320 on the substrate portion 310. Such a process is simple to operate.

The first passage 610 is parallel to the first wall 121. In some embodiments, the extending direction of the first passage 610 may be parallel to a width direction of the battery cell 10. In some embodiments, the connecting portion 320 is provided in a quantity of two, where the two connecting portions 320 are spaced apart in a length direction of the housing 100, and a distance between the two connecting portions 320 is greater than or equal to 0.3 times a size of the recess 122 in the length direction of the housing 100. The distance between the two connecting portions 320 is a size of the opening of the first passage 610. In the width direction of the battery cell 10, the size of the first passage 610 is the same as the size of the shielding member 300; and in the length direction of the battery cell 10, the size of the first passage 610 is greater than or equal to 0.3 times the size of the recess 122 in the width direction of the housing 100. Within such a size range, the first passage 610 has sufficient volume and sufficient opening size, so as to facilitate communication between the recess 122 and the inner cavity of the housing 100 through the first passage 610. As shown in FIG. 6 and FIG. 11, in the length direction of the battery cell 10, the size of the first passage 610 is L2, and the size of the recess 122 is m, where L2 ≥ 0.3m.

In some embodiments, the connecting portion 320 is provided in a quantity of two, where the two connecting portions 320 are spaced apart in a length direction of the housing 100, and a distance between the two connecting portions 320 is greater than or equal to 0.6 times a size of the recess 122 in the length direction of the housing 100. As shown in FIG. 6 and FIG. 11, in the length direction of the battery cell 10, the size of the first passage 610 is L2, and the size of the recess 122 is m, where L2 ≥ 0.6m. Such a size range is applicable to a relatively large number of models of the battery cell 10, and the size of the shielding member 300, the size of the first passage 610 in the shielding member 300, and the size of the recess 122 can be specifically set based on the size of the first wall 121 in the battery cell 10.

Referring to FIG. 7 and FIG. 8, in some embodiments, the extending direction of the first passage 610 may be parallel to the length direction of the battery cell 10, and the connecting portion 320 is provided in a quantity of two, where the two connecting portions 320 are spaced apart in a width direction of the housing 100, and a distance between the two connecting portions 320 is greater than or equal to 0.1 times a size of the recess 122 in the width direction of the housing 100. In the length direction of the battery cell 10, the size of the first passage 610 is the same as the size of the shielding member 300; and in the width direction of the battery cell 10, the size of the first passage 610 is greater than or equal to 0.1 times the size of the recess 122 in the length direction of the housing 100. Within such a size range, the first passage 610 has sufficient volume and sufficient opening size, so as to facilitate communication between the recess 122 and the inner cavity of the housing 100 through the first passage 610. As shown in FIG. 8 and FIG. 11, in the width direction of the battery cell 10, the size of the first passage 610 is L1, and the size of the recess 122 is n, where L1 ≥ 0.1n.

In some embodiments, the extending direction of the first passage 610 may be parallel to the length direction of the battery cell 10, and the connecting portion 320 is provided in a quantity of two, where the two connecting portions 320 are spaced apart in a width direction of the housing 100, and a distance between the two connecting portions 320 is greater than or equal to 0.3 times a size of the recess 122 in the width direction of the housing 100. As shown in FIG. 8 and FIG. 11, in the width direction of the battery cell 10, the size of the first passage 610 is L1, and the size of the recess 122 is n, where L1 ≥ 0.3n. Such a size range is applicable to a relatively large number of models of the battery cell 10, and the size of the shielding member 300, the size of the first passage 610 in the shielding member 300, and the size of the recess 122 can be specifically set based on the size of the first wall 121 in the battery cell 10.

In a case of the weak portion 400 including explosion-proof valve sheets 410, some of the explosion-proof valve sheets 410 are oval or elliptical, with the long axis being larger than the short axis. To facilitate mounting of the explosion-proof valve sheet 410, the through hole opened on the first wall 121 is also oval or elliptical, and the recess 122 formed at the explosion-proof valve sheet 410 is also oval or elliptical. In addition, the long axis of the recess 122 is parallel to the length direction of the battery cell 10, and the short axis of the recess 122 is parallel to the width direction of the battery cell 10. In other words, the size of the recess 122 in the length direction of the battery cell 10 is larger than the size of the recess 122 in the width direction of the battery cell 10. Therefore, when the first passage 610 runs through the shielding member 300 along the width direction of the battery cell 10, the volume V of the first passage 610 is the product of the projection area S on the substrate layer and the thickness h of the connecting portion 320, that is, V = S*h. The size of the first passage 610 in the width direction of the battery cell 10 is L1, and the size of the first passage 610 in the length direction of the battery cell 10 is L2, where S = L 1 *L2. Because the size of the recess 122 in the length direction of the battery cell 10 is larger than the size of the recess 122 in the width direction of the battery cell 10, and the shielding member 300 is connected to the first wall 121 to cover the entire recess 122, the size of the shielding member 300 in the length direction of the battery cell 10 is larger than the size of the recess 122 in the length direction of the battery cell 10, and the size of the shielding member 300 in the width direction of the battery cell 10 is larger than the size of the recess 122 in the width direction of the battery cell 10. When the first passage 610 runs through the shielding member 300 along the width direction of the battery cell 10, L1 of the first passage 610 is a constant which is equal to the size of the shielding member 300 in the width direction of the battery cell 10, and thus the volume of the first passage 610 can be controlled only by changing L2. When the first passage 610 runs through the shielding member 300 along the length direction of the battery cell 10, L2 of the first passage 610 is a constant which is equal to the size of the shielding member 300 in the length direction of the battery cell 10, and thus the volume of the first passage 610 can be controlled only by changing L1. To achieve the volume of the first passage 610 reaching a set range, because the size of the shielding member 300 in the width direction of the battery cell 10 is smaller than the size of the battery cell 10 in the length direction, the size of the opening of the first passage 610 may be set to be relatively larger when the first passage 610 runs through the shielding member 300 along the width direction of the battery cell 10, and the size of the opening of the first passage 610 may be set to be relatively smaller when the first passage 610 runs through the shielding member 300 along the length direction of the battery cell 10.

In other embodiments, the extending direction of the first passage 610 may alternatively be oblique to the length direction of the battery cell 10.

As shown in FIG. 5 to FIG. 8, in some embodiments, the gas passage 600 includes a second passage 620, where an air vent runs through the shielding member 300 along a thickness direction of the shielding member 300, the air vent forms the second passage 620, and a projection of the air vent on the first wall 121 is located outside the weak portion 400. In such an arrangement manner, the second passage 620 is provided on the shielding member 300, and the air vent running through the shielding member 300 forms the second passage 620. In such an arrangement manner, the second passage 620 is less likely to be covered by other structures located inside the housing 100, thereby facilitating constant communication between the recess 122 and the inner cavity of the housing 100.

In some embodiments, a hole diameter of the air vent is R, where 0.1 mm ≤ R ≤ 10 mm. For example, R may be 0.1 mm, 0.5 mm, 1.4 mm, 1.7 mm, 1.9 mm, 2.5 mm, 3 mm, 3.5 mm, 4.2 mm, 4.8 mm, 5.5 mm, 6.2 mm, 7 mm, 7.5 mm, 8 mm, 8.5 mm, 9 mm, 9.5 mm, or 10 mm. Within such a range of the hole diameter of the air vent, the provision of the air vent can not only allow the shielding member 300 to have certain structural strength to cover the weak portion 400 but also meet the requirement for communication between the recess 122 and the inner cavity of the housing 100. When the hole diameter of the air vent is less than or equal to 10 mm, the requirement of the shielding member 300 for covering the weak portion 400 can be met, and the size of the air vent is insufficient for the electrolyte to enter the recess 122.

In some embodiments, 1 mm ≤ R ≤ 5 mm. For example, R may be 1 mm, 1.1 mm, 1.2 mm, 1.5 mm, 1.8 mm, 2.2 mm, 3.5 mm, 3.8 mm, 4 mm, 4.5 mm, or 5 mm. Within such a size range, the air vent has good gas permeability and is insufficient for the electrolyte to enter the recess 122 without affecting the requirement of the shielding member 300 for covering the weak portion 400 in the thickness direction of the first wall 121.

In some embodiments, the gas passage 600 includes any one of the foregoing first passages 610 and also the foregoing second passage 620. In such an arrangement manner, the provision of the first passage 610 increases the communication region between the recess 122 and the inner cavity of the housing 100, and when the opening is reduced due to impact of the electrolyte on the first passage 610, the provision of the second passage can enhance effectiveness of communication between the recess 122 and the inner cavity of the housing 100.

A second aspect of the embodiments of this application provides a battery including the battery cell 10 in the foregoing embodiments.

The battery includes one or more battery cells 10, and the one or more battery cells 10 form the battery along with structures such as a heat exchange means. In some cases, the battery further includes a box, and the battery cells 10 are accommodated in the box. The box is configured to provide an accommodating space for the battery cells 10, and structures such as a heat exchange means may be disposed in the box. The box 10 may be a variety of structures.

In the battery, the battery cell 10 may be provided in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the box; or certainly, the battery may be formed by the plurality of battery cells 10 being connected in series, parallel or series-parallel first to form a battery module and then a plurality of battery modules being connected in series, parallel or series-parallel to form an entirety which is accommodated in the box. The battery may further include other structures. For example, the battery may further include a busbar configured to implement electrical connection between the plurality of battery cells 10.

Each battery cell 10 may be a secondary battery or a primary battery, and may be a lithium-sulfur battery, a sodium-ion battery, or a magnesium-ion battery, without being limited thereto. The battery cell 10 may be cylindrical, flat, cuboid, or of other shapes.

A third aspect of the embodiments of this application provides an electric apparatus including the battery in the foregoing embodiments, where the battery is configured to supply electric energy.

The electric apparatus includes the foregoing battery, and therefore has at least all of the beneficial effects of the foregoing battery. Details are not described herein again.

The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle is used as an example for description of the following embodiments. The vehicle may be a fossil fuel vehicle, a natural gas vehicle, or a new energy vehicle. The new energy vehicle may be a battery electric vehicle, a hybrid electric vehicle, a range-extended electric vehicle, or the like. The vehicle is provided with a battery inside, where the battery may be disposed at the bottom, front, or rear of the vehicle. The battery may be configured to supply power to the vehicle. For example, the battery may be used as an operational power source for the vehicle. The vehicle may further include a controller and a motor, where the controller is configured to control the battery to supply power to the motor, for example, to satisfy power needs of start, navigation, and driving of the vehicle.

In some embodiments of this application, the battery can be used as not only the operational power source for the vehicle but also a driving power source for the vehicle, replacing or partially replacing fossil fuel or natural gas to provide driving traction for the vehicle.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, **characterized by** comprising:
a housing, wherein the housing has an inner cavity, the housing has a first wall, and the first wall is provided with a weak portion; and
a shielding member, wherein the shielding member is disposed in the inner cavity, and the shielding member covers at least a portion of the weak portion in a thickness direction of the first wall.

2. The battery cell according to claim 1, **characterized in that** the shielding member covers the entire weak portion.

3. The battery cell according to claim 1 or 2, **characterized in that** the weak portion encloses a pressure relief region, the shielding member covering at least a portion of the pressure relief region.

4. The battery cell according to claim 1, **characterized in that** the shielding member is connected to the first wall.

5. The battery cell according to claim 4, **characterized in that** the shielding member comprises a substrate portion and a connecting portion, wherein the substrate portion is connected to the first wall through the connecting portion, and at least a portion of the connecting portion surrounds the weak portion.

6. The battery cell according to any one of claims 1 to 5, **characterized in that** the first wall has a recess, wherein the weak portion is disposed on an inner wall of the recess, a gas passage is provided between the shielding member and the housing, and the gas passage communicates with the recess.

7. The battery cell according to any one of claims 1 to 5, **characterized in that** the first wall has a recess, wherein the weak portion is disposed on an inner wall of the recess, a gas passage is provided on the shielding member and/or the housing, and the gas passage communicates with the recess.

8. The battery cell according to claim 7, **characterized in that** the gas passage comprises a first passage, wherein the shielding member comprises a substrate portion and a plurality of connecting portions spaced apart on the substrate portion, and the first passage is formed between adjacent ones of the connecting portions.

9. The battery cell according to claim 8, **characterized in that** the first passage has at least two openings, the opening being used for communication with the inner cavity of the housing.

10. The battery cell according to claim 9, **characterized in that** the first passage runs through the shielding member along a direction parallel to the first wall.

11. The battery cell according to any one of claims 8 to 10, **characterized in that** the connecting portion is provided in a quantity of two, wherein the two connecting portions are spaced apart in a width direction of the housing, and a distance between the two connecting portions is greater than or equal to 0.1 times a size of the recess in the width direction of the housing.

12. The battery cell according to claim 11, **characterized in that** the distance between the two connecting portions is greater than or equal to 0.3 times the size of the recess in the width direction of the housing.

13. The battery cell according to any one of claims 8 to 10, **characterized in that** the connecting portion is provided in a quantity of two, wherein the two connecting portions are spaced apart in a length direction of the housing, and a distance between the two connecting portions is greater than or equal to 0.3 times a size of the recess in the length direction of the housing.

14. The battery cell according to claim 13, **characterized in that** the distance between the two connecting portions is greater than or equal to 0.6 times the size of the recess in the length direction of the housing.

15. The battery cell according to any one of claims 7 to 14, **characterized in that** the gas passage comprises a second passage, wherein an air vent runs through the shielding member along a thickness direction of the shielding member, the air vent forms the second passage, and a projection of the air vent on the first wall is located outside the weak portion.

16. The battery cell according to claim 15, **characterized in that** a hole diameter of the air vent is R, wherein 0.1 mm ≤ R ≤ 10 mm.

17. The battery cell according to claim 16, **characterized in that** 1 mm ≤ R ≤ 5 mm.

18. The battery cell according to any one of claims 1 to 17, **characterized in that** thickness of the shielding member is greater than or equal to 0.01 mm, and the thickness of the shielding member is less than or equal to 0.2 mm.

19. The battery cell according to claim 18, **characterized in that** the thickness of the shielding member is less than or equal to 0.1 mm.

20. The battery cell according to any one of claims 1 to 19, **characterized in that** a cell assembly is accommodated in the housing, the first wall being located below the cell assembly.

21. The battery cell according to claim 20, **characterized in that** the housing comprises a housing body and an end cover plate, wherein the end cover plate covers an opening of the housing body, and the first wall is located on the end cover plate.

22. The battery cell according to claim 20, **characterized in that** the housing comprises a housing body and an end cover plate, wherein the end cover plate covers an opening of the housing body, and the first wall is located on the housing body.

23. The battery cell according to any one of claims 6 to 19, **characterized in that** the first wall has a recess, wherein the weak portion is disposed on an inner wall of the recess, and in a length direction of the housing, a size of the shielding member is at least 30 mm greater than a size of the recess.

24. The battery cell according to claim 23, **characterized in that** in the length direction of the housing, a difference between the size of the shielding member and the size of the recess is less than or equal to 120 mm.

25. The battery cell according to any one of claims 6 to 19, **characterized in that** the first wall has a recess, wherein the weak portion is disposed on an inner wall of the recess, and in a width direction of the housing, a size of the shielding member is at least 4 mm greater than a size of the recess.

26. The battery cell according to claim 25, **characterized in that** a difference between the size of the shielding member and the size of the recess is less than or equal to 40 mm.

27. A battery, **characterized by** comprising the battery cell according to any one of claims 1 to 26.

28. An electric apparatus, **characterized in that** the electric apparatus comprises the battery according to claim 27, wherein the battery is configured to supply electric energy.
